Europäisches Patentamt

European Patent Office

Office européen des brevets

(19)

(11) Publication number: **0 041 278**

**B1**

(12) **EUROPEAN PATENT SPECIFICATION**

(45) Date of publication of patent specification: **15.08.84**

(51) Int. Cl.³: **G 01 D 11/30, G 12 B 9/08**

(21) Application number: **81200343.2**

(22) Date of filing: **27.03.81**

(54) Clamping ring.

(30) Priority: **03.06.80 NL 8003238**

(43) Date of publication of application:
**09.12.81 Bulletin 81/49**

(45) Publication of the grant of the patent:
**15.08.84 Bulletin 84/33**

(84) Designated Contracting States:
**AT BE CH DE FR GB IT LI LU NL SE**

(56) References cited:
**FR - A - 1 284 590**
**GB - A - 826 316**
**US - A - 2 641 038**
**US - A - 2 739 830**
**US - A - 3 744 748**

(73) Proprietor: **Eerste Nederlandse Fabriek van Manometers B.V.**
**Nieuwpoortweg 10**
**NL-3125 AP Schiedam (NL)**

(72) Inventor: **Donkervoort, Dorotheus**
**Emmakade 9**
**NL-3135 JD Vlaardingen (NL)**

(74) Representative: **Urbanus, Henricus Maria, Ir. et al,**
**c/o Vereenigde Octrooibureaux Nieuwe Parklaan 107**
**NL-2587 BP 's-Gravenhage (NL)**

## Description

The invention relates to a clamping ring for fixing an article in a panel, said article having a stop shoulder for engagement with the front of the panel and a cylindrical portion which is designed to project through the panel, the clamping ring being adapted to be pushed from behind the panel onto the cylindrical portion of the article.

Although the invention is not strictly restricted thereto, the major field of application should be seen in the assembly of measuring instruments in panels, such as pressure gauges, thermometers, tachometers, bodometers and the like and in the following part of the specification reference will be made only to pressure gauges for convenience' sake.

A pressure gauge housing has often the shape of a generally cylindrical, flat box having at the front, window-side an edge which, in case of assembly of the pressure gauge mounted in a panel, should come to rest flat against the front of the panel. However, pressure gauges allow a choice, depending on the place where the pressure gauge is used and the type of pressure gauge, between the self-supporting assembly of the pressure gauge via a connecting nipple on a part of a line system on the one hand, and assembly on or a recessed position in a panel on the other hand.

For accommodating a pressure gauge in a panel, it is known from the British patent no. GB - A - 926,316 to make use of a contractible metal ring slidable over the cylindrical portion, and a coacting contracting and retaining ring, which ring is fastened to the panel with screws and nuts. In this case, it is then necessary to provide screw holes in the panel.

It is the object of the invention to provide an attachment means through which the article can be mounted rapidly and reliably in a wall element without particular provisions having been made for the article to be attached respectively in the wall element. In case of pressure gauges, allowances has to be made for high line pressures, i.e. heavy lines which, connected to the thread of the pressure gauge, may not loosen the pressure gauge in operation as a result of vibrations.

To this effect according to the invention the clamping ring is provided with a plurality of wedges spaced circumferentially of the ring, each wedge being mounted on a screwed bolt received in a screw hole in the ring and the free end of said bolt constituting a stop adapted to coact with the rear wall of the panel, and the ring being composed of mutually pivoting portions, the pivot points being located at and between the pairs of screw-holes.

By means of the clamping ring according to the invention the respective article can be simply mounted in an opening in a panel by pushing the article into the panel opening, pushing the clamping ring at the back over the article portion projecting in situ, while clamping the ring onto the portion and by pulling the article by means of the axial positioning means further backwards relative to the back wall of the panel.

It is observed in this respect that French patent FR - A - 1,284,590 discloses per se an attachment means comprising two rings which, through interposition of bushes are kept spaced apart from each other, on the understanding that the rings in at least one position can be drawn towards each other between said bushes to effect a radial clamping effect. Not only this known apparatus is larger and more expensive than that according to the invention, but moreover the radial clamping effect will not be distributed uniformly over the circumference.

A clamping effect which is more uniformly distributed is obtained with the apparatus disclosed in US - A - 2739830, but not to the extent provided by the clamping ring of the present invention.

The clamping ring of the invention may be constructed such that between the pivot points, the portions of the ring have a small radial bending stiffness than at the pivot points.

In a constructively simple embodiment of the invention at least 3 wedges are uniformly spaced in circumferential direction of the ring.

One embodiment of the clamping ring according to the invention will now be described by way of example, with reference to the accompanying drawing, wherein

Fig. 1 is a side view of an article mounted in a panel by means of the clamping ring according to the invention;

Fig. 2 is a top view of the ring; and

Fig. 3 is an enlarged detail view on the arrow III—III in Fig. 1.

According to the drawing an article, in the present case a pressure gauge having at the front side a ring edge 1 and at the back side a housing 2 in the form of a flat cylindrical box, is fixed in a panel 3 by means of a clamping ring 4.

The clamping ring 4 is composed of arc segments 5 which are interconnected by pivots 6, respectively screwed bolts 7, each received in a screw hole in one of the ring arc segments 5, while the adjoining ring arc segment 5 is adapted for swivelling movement about the shank 8 of the screwed bolt 7, so that also at the screwed bolts 7, the ring arc segments 5 meeting each other in situ are capable of pivoting relatively to each other.

To each screwed bolt 7 there is coupled axially a wedge element 9, i.e. the wedge element comprising in the depicted embodiment two wedges 10, connected by a bridge 11, is rotatable in situ of the bridge relative to the screw bolt 7, however, can follow axial movements of the screw 7. The wedges 10 of the wedge element 11 project with clearance through corresponding recesses 12 in the ring segments 5, so that the ring segments have freedom for slight swivelling movements about the screwed bolt shank 8 functioning as pivot pin.

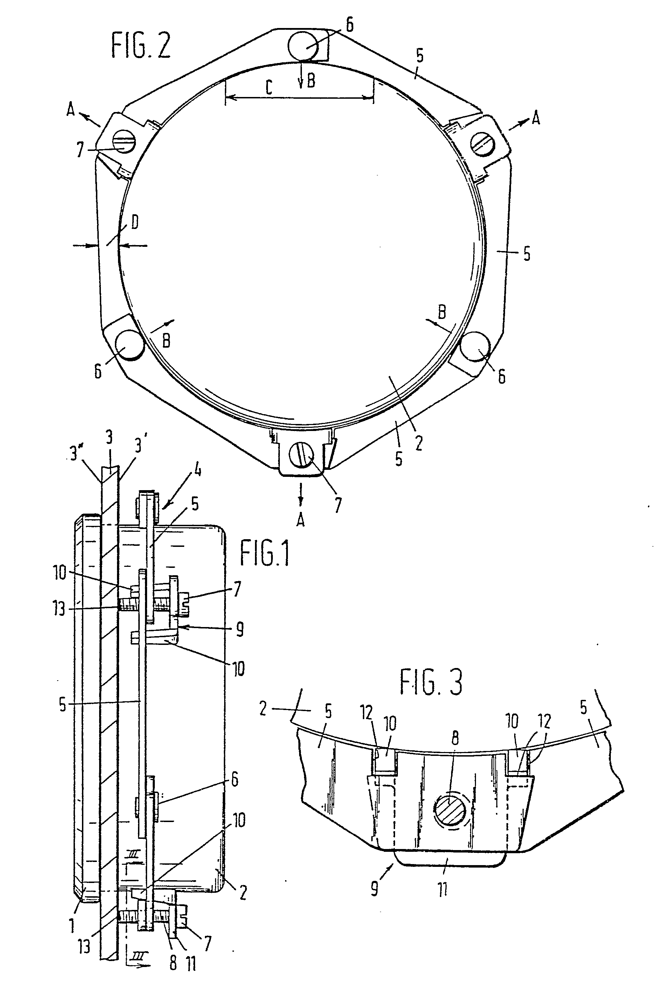

The free end 13 of the screwed bolts functions as stop element adapted for coaction with the rear wall 3' of the panel 3. By tightening the screwed bolts 7 in the situation shown in Figure 1, the wedge elements 9 slide between the ring 4 and the pressure gauge housing 2 relative to the ring in the direction of the panel rear wall 3', so that simultaneously both the ring segments 5 are clamped about the pressure gauge housing 2 when the ring and the clamped pressure gauge housing are pushed away from the panel rear wall 3' until the ring 1 abuts against the front wall 3'' of the panel, thus fixing the pressure gauge in the panel 3.

During the clamping of the ring 4 on the pressure gauge housing 2, the ring zones in the vicinity of the wedge elements 9 move away from the pressure gauge housing 2 in the arrow direction A and the intermediate zones, so on either side adjoining the pivots 6, are moved radially inwardly according to the arrow direction B and the respective segments of the ring 4 can clampingly nestle against the pressure gauge housing 2, e.g. over an arc zone indicated by C. Since the pivots 6 allow conveniently the required ring deformation, the dimension of said zone C may be optimal, to which contributes that in the ring zones between the pivots the bending stiffness of the ring material is smaller than in situ of the pivots 6, respectively the screw and wedge assemblies 8, 9. This variation in bending stiffness can be obtained by selecting in said intermediate zones the radial dimension of the ring material indicated by D smaller than elsewhere.

By means of the clamping ring it is possible in a very simple manner to mount an article 1, 2 in a panel 3 by sliding the ring over the portion 2 of the article projecting from the rear side of the panel until the free ends 13 of the respective screwed bolts 7 rest against the rear side 3' of the panel, after which the screwed bolts 7 are tightened until the required clamping is achieved.

## Claims

1. A clamping ring for fixing an article (2) in a panel, said article having a stop shoulder (1) for engagement with the front of the panel and a cylindrical portion which is designed to project through the panel, the clamping ring (4) being adapted to be pushed from behind the panel onto the cylindrical portion of the article, characterized by a plurality of wedges (10) spaced circumferentially of the ring, each wedge being mounted on a screwed bolt (7) received in a screw hole in the ring and the free end (13) of said bolt constituting a stop adapted to coact with the rear wall of the panel, and the ring being composed of mutually pivoting portions, the pivot points (6) being located at and between pairs of screw-holes.

2. A clamping ring according to claim 1, characterized in that between the pivot points, the portions of the ring have a smaller radial bending stiffness than at the pivot points.

3. A clamping ring according to claim 1 or 2, characterized in that at least 3 wedges are uniformly spaced in circumferential direction of the ring.

## Patentansprüche

1. Klemmring zur Befestigung eines Gegenstandes (2) in einer Platte, wobei dieser Gegenstand eine Anschlagschulter (1) zur Zusammenwirkung mit der Vorderseite der Platte und einen zum Vorstehen durch die Platte ausgelegten zylindrischen Abschnitt aufweist und der Klemmring (4) geeignet ist, von hinter der Platte auf den zylindrischen Abschnitt des Gegenstandes heraufgeschoben zu werden, gekennzeichnet durch eine Anzahl Keile (10), die auf dem Umfang des Ringes beabstandet und jeweils auf einem in einer Gewindebohrung des Ringes aufgenommenen Gewindebolzen (7) gelagert sind, dessen freies Ende (13) einen zur Zusammenwirkung mit der Rückwand der Platte geeigneten Anschlag bildet, wobei der Ring aus sich gegenseitig verschwenkenden Abschnitten zusammengesetzt ist und die Schwenkpunkte (6) an und zwischen Paaren von Gewindebohrungen liegen.

2. Klemmring nach Anspruch 1, dadurch gekennzeichnet, daß die Abschnitte des Ringes zwischen den Schwenkpunkten eine geringere radiale Biegesteifigkeit haben als an den Schwenkpunkten.

3. Klemmring nach Anspruch 1 oder 2, dadurch gekennzeichnet, daß wenigstens drei Keile in Umfangsrichtung des Ringes gleichmäßig beabstandet sind.

## Revendications

1. Bague de blocage pour fixer un article (2) dans un panneau, ledit article comportant un épaulement de butée (1) pour s'appliquer contre l'avant du panneau et une partie cylindrique conçue pour faire saillie au travers du panneau, la bague de blocage (4) étant adaptée pour être poussée de l'arrière du panneau sur la partie cylindrique de l'article, caractérisée par une pluralité de coins (10) espacés circonférentiellement sur la bague, chaque coin étant monté sur une vis (7) engagée dans un trou fileté ménagé dans la bague, et l'extrémité libre (13) de ladite vis constituant une butée adaptée pour coopérer avec la paroi arrière du panneau, et la bague étant composée de parties mutuellement pivotantes, les points de pivotement (6) étant placés sur et entre des paires de trous filetés de passage de vis.

2. Bague de blocage selon la revendication 1, caractérisée en ce que, entre les points de pivotement, les parties de la bague ont une

5      **0 041 278**      6

rigidité à la flexion radial plus petite qu'aux points de pivotement.

3. Bague de blocage selon la revendication 1 ou 2, caractérisée en ce qu'au moins trois coins sont uniformément espacés dans la direction circonférentielle de la bague.

FIG. 2

FIG. 1

FIG. 3